# DEMANDE DE BREVET EUROPEEN

(11) **EP 1 880 888 A1**
(43) Date de publication de la demande: **23.01.2008**
(21) Numéro de dépôt: 07301249.4
(22) Date de dépôt: 18.07.2007
(51) Int. Cl.: B60J 7/10, B60P 7/04, B60J 5/06, B32B 15/02, B32B 15/08, B32B 27/30, B61D 39/00, B60R 25/10, B32B 37/14

(54) **Paroi souple securisée de type bâche, en particulier pour carrosserie de vehicule**

(30) Priorité: 18.07.2006 FR 0606963
(71) Demandeur: F.A.I.R. INTERNATIONAL, 44300 Nantes (FR)
(72) Inventeur: Blond, Jean, 44390, Nort sur Erdre (FR)
(74) Mandataire: Michelet, Alain

(57) **Abrégé**

La présente invention concerne une paroi souple sécurisée de type bâche, en particulier destinée à équiper une carrosserie de véhicule, intégrant un treillis métallique anti-vandalisme (4).
Selon l'invention, cette paroi souple sécurisée comporte au moins une partie constituée d'un complexe de deux membranes de matière (3, 5) prenant en sandwich le treillis anti-vandalisme (4) :
la membrane extérieure (3), destinée à venir côté extérieur du véhicule, est réalisée en matériau(x) à faible capacité d'allongement ;
ledit treillis anti-vandalisme (4,) est formé d'une pluralité d'éléments métalliques allongés, par exemple de type acier en forme de micro-câbles, de feuillards et/ou de tresses, agencés longitudinalement et transversalement les uns par rapport aux autres, avec des points de soudage au niveau de leurs points d'intersection ou de croisement, pour former des mailles carrées ou rectangulaires dont les côtés sont avantageusement compris entre 2 et 20 cm ; et
la membrane intérieure (5), destinée à venir côté intérieur du véhicule, étant réalisée en matériau(x) lui conférant une certaine capacité de déformation élastique,
lesquelles membranes (3, 5) sont collées ou soudées ensemble sur au moins la partie de leur surface en regard qui emprisonne ledit treillis (4).

## Description

La présente invention concerne les parois souples qui équipent couramment les carrosseries de véhicules de type remorque ou semi-remorque. Elle concerne en particulier une nouvelle structure de paroi souple sécurisée, intégrant un treillis métallique anti-vandalisme.

Les parois souples de véhicules, encore appelées rideaux, qui constituent leurs cloisons latérales, sont suspendues aux rails supérieurs de la carrosserie. Ces parois souples sont mises en tension, d'une part, au niveau de leurs extrémités verticales par des moyens appropriés, par exemple de type enrouleur à cliquet, et d'autre part, au niveau de la liaison horizontale avec le plateau du véhicule par des organes mécaniques de tension qui sont fixés sur des sangles verticales.

Pour améliorer la sécurité des marchandises transportées, les véhicules sont souvent équipés de parois souples sécurisées, c'est-à-dire des parois constituées d'une membrane souple dont l'une des faces est renforcée par un treillis métallique anti-vandalisme.
La présence de ce treillis anti-vandalisme permet d'améliorer la solidité de la paroi, mais surtout d'empêcher les intrusions par lacération.
Une paroi souple de ce genre est par exemple décrite dans le document FR-2 743 712.

Cependant, ces bâches sécurisées ont bien souvent des structures complexes et/ou sont difficiles à confectionner.
La demanderesse a développé une nouvelle structure de paroi sécurisée dont les coûts de fabrication et de revient sont plus intéressants ; ces parois sont en outre particulièrement résistantes aux détériorations mécaniques, notamment par lacération.

La paroi sécurisée selon l'invention se distingue en ce qu'elle comporte au moins une partie constituée d'un complexe de deux membranes de matière prenant en sandwich le treillis métallique anti-vandalisme,
la membrane extérieure, destinée à venir côté extérieur du véhicule, étant réalisée en matériau(x) à faible capacité d'allongement,
ledit treillis anti-vandalisme étant formé d'une pluralité d'éléments métalliques allongés, par exemple de type acier en forme de micro-câbles, de feuillards et/ou de tresses, agencés longitudinalement et transversalement les uns par rapport aux autres, avec des points de soudage au niveau de leurs points d'intersection ou de croisement, pour former des mailles carrées ou rectangulaires dont les côtés sont avantageusement compris entre 2 cm et 20 cm, et
la membrane intérieure, destinée à venir côté intérieur du véhicule, étant réalisée en matériau(x) lui conférant une certaine capacité de déformation élastique,
lesquelles membranes extérieure et intérieure sont collées ou soudées ensemble sur au moins la partie de leur surface en regard qui emprisonne ledit treillis.
De la sorte, on augmente de manière intéressante la limite de rupture mécanique de la paroi.

Dans une forme de réalisation intéressante, les deux membranes sont réalisées en matériau thermosoudable, et elles sont soudées l'une sur l'autre par thermosoudage.

La membrane extérieure se compose avantageusement d'un tissé dont au moins la face venant en regard de la membrane intérieure est munie d'un revêtement en matériau thermosoudable ou collable ; de son côté, la membrane intérieure est réalisée intégralement dans un matériau plastique thermosoudable ou collable, opaque ou de préférence translucide.

Selon une forme de réalisation préférée, la membrane extérieure consiste en un tissu enduit de PVC dont l'âme est constituée de fibres naturelles ou synthétiques, par exemple de fils en polyester, et la membrane intérieure est réalisée en une matière non-tissée.

Dans un mode de réalisation particulier:
- la membrane extérieure, souple, est constituée d'un tissé enduit de matériau PVC thermosoudable, dont l'âme est constituée de fibres en polyester et dont le grammage est de l'ordre de 600 à 900 g/m²,
- le treillis métallique est formé d'une pluralité d'éléments métalliques allongés, agencés longitudinalement et transversalement pour constituer ensemble des mailles carrées ou rectangulaires dont les côtés sont compris entre 2 cm et 20 cm, et
- la membrane intérieure est réalisée en matériau souple non tissé, de type matériau plastique thermosoudable dont le grammage est de l'ordre de 500 g/m².

Selon une autre particularité, le treillis anti-vandalisme est formé d'une pluralité d'éléments métalliques allongés, par exemple de type acier en forme de micro-câbles, de feuillards et/ou de tresses, agencés longitudinalement et transversalement les uns par rapport aux autres pour former des mailles carrées ou rectangulaires, qui sont recouverts d'un revêtement approprié pour les protéger de la corrosion et pour assurer leur isolation électrique, par exemple de type PVC, laque ou revêtement spécial.

Selon encore une autre caractéristique, les deux membranes de la paroi emprisonnent un réseau complémentaire de fils ou de feuillards métalliques, isolé et indépendant du treillis anti-vandalisme, qui est destiné à être raccordé à un système d'alarme apte à signaler sa rupture, en particulier en cas de lacération desdites membranes.

Dans un mode de réalisation particulier, la paroi souple sécurisée forme un rideau coulissant apte à coopérer avec une structure de carrosserie de véhicule ou autre. Elle comporte alors des accessoires de type organes de coulissement en partie haute, organes d'accrochage aux extrémités latérales verticales permettant d'exercer une tension longitudinale sur le rideau, organes d'accrochage régulièrement répartis en partie basse pour sa fixation sur le bord du plancher de la carrosserie, ou encore des sangles et des renforts, lesquels accessoires sont avantageusement solidarisés au moins pour certains par thermosoudage ou par collage entre ou sur les membranes qui prennent en sandwich le treillis anti-vandalisme.
Le ou les organes d'accrochage, aux extrémités latérales verticales de la paroi souple, coopèrent avantageusement avec la carrosserie par l'intermédiaire de profilés d'accrochage comportant une lèvre longitudinale verticale apte à recouvrir la face extérieure de la membrane extérieure, au niveau de la zone de jonction avec ledit organe d'accrochage associé.

La présente invention concerne encore le procédé de fabrication d'une paroi souple sécurisée telle que décrite dessus, ce procédé comprenant la succession d'opérations suivantes :
- la mise en tension d'une première membrane développée, de préférence la membrane extérieure,
- la pose du treillis anti-vandalisme sur la face intérieure de ladite première membrane,
- éventuellement la pose du réseau complémentaire indépendant, destiné à être connecté au système d'alarme,
- la pose de la seconde membrane sur la face interne de ladite première membrane, de sorte à recouvrir intégralement ledit treillis anti-vandalisme et le cas échéant ledit réseau complémentaire d'alarme, et
- le thermosoudage ou le collage des faces en regard des deux membranes, au moins sur toute la surface emprisonnant ledit treillis anti-vandalisme.
La paroi souple est éventuellement soumise à une opération de finition par la fixation d'accessoires adaptés, notamment de sangles et de renforts. Certains au moins de ces accessoires sont avantageusement positionnés entre ou sur les membranes avant l'opération de thermosoudage ou de collage, et ils sont solidarisés avec l'une au moins desdites membranes lors de la mise en oeuvre de ladite opération de thermosoudage ou de collage.

L'invention sera encore illustrée, sans être aucunement limitée, par la description suivante d'une forme de réalisation particulière, donnée uniquement à titre d'exemple, et représentée sur les dessins annexés dans lesquels :
- la figure 1 est une vue générale et en perspective d'une paroi souple selon l'invention, orientée du côté de sa membrane externe (cette membrane externe comportant ici une découpe locale du côté de son coin supérieur gauche pour montrer directement le treillis anti-vandalisme) ;
- la figure 2 est une vue en coupe selon le plan II-II de la paroi souple de la figure 1, montrant schématiquement la prise en sandwich du treillis anti-vandalisme, formé de micro-câbles métalliques à section circulaire, entre les deux membranes ;
- la figure 3 est une vue schématique agrandie et en coupe de l'une des extrémités verticales de la paroi souple, montrant l'association de son jonc d'extrémité avec un profilé particulier de fixation à la carrosserie du véhicule ;
- la figure 4 montre une structure alternative du mode de réalisation de la figure 2, dans lequel le treillis anti-vandalisme est formé d'un ensemble de feuillards métalliques, à section rectangulaire ;
- la figure 5 (figures 5A à 5F) montre schématiquement les principales étapes d'un procédé de fabrication d'une paroi souple conforme à l'invention.

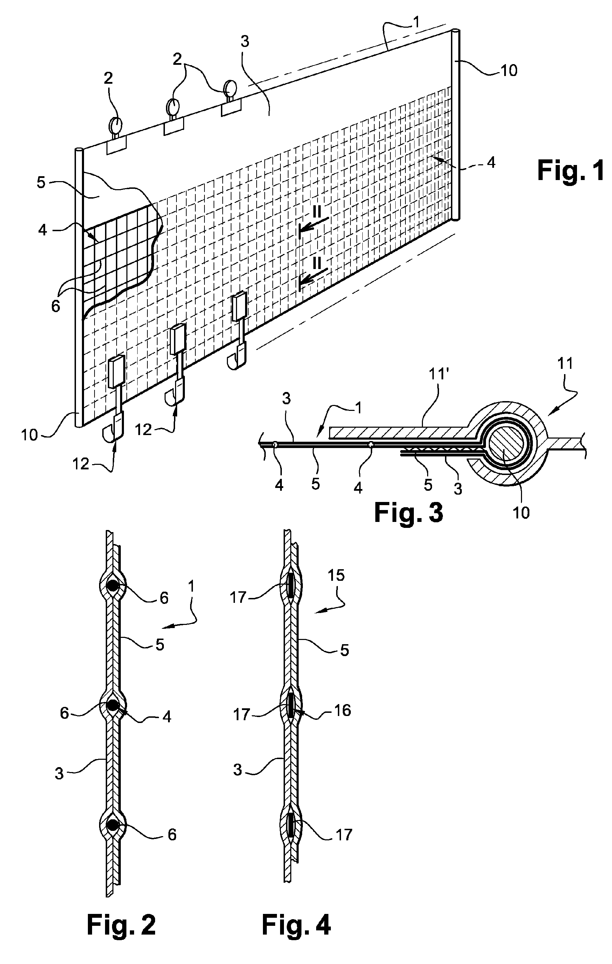

Tel qu'il apparaît sur la figure 1, le rideau de carrosserie de véhicule est constitué d'une paroi souple sécurisée 1 équipée en partie haute d'une pluralité de galets 2 régulièrement répartis, pour sa suspension à un rail supérieur (non représenté).

Sur la figure 2, on peut voir que la paroi souple 1 en question forme un complexe comprenant une membrane extérieure 3, un treillis anti-vandalisme 4 et une membrane intérieure 5.

La membrane extérieure 3, souple, est constituée d'un tissu imprégné d'un matériau imperméable. Il s'agit avantageusement d'un tissé enduit de matériau PVC thermosoudable, dont l'âme est constituée de fibres en polyester et dont le grammage est de l'ordre de 600 à 900g/m².

Le treillis anti-vandalisme intercalaire 4 est formé d'une pluralité de fils 6 en matière métallique, agencés longitudinalement et transversalement pour constituer ensemble des mailles carrées ou rectangulaires dont les côtés sont compris entre 2 cm et 20 cm (avantageusement entre 5 et 15 cm).
Comme illustré sur la figure 2, on peut utiliser des micro-câbles métalliques de type acier, dont la section est de forme circulaire.
Ces micro-câbles 6 peuvent subir un traitement de surface approprié pour les protéger de la corrosion et assurer leur isolation électrique ; ce traitement peut consister en un revêtement de matière plastique (PVC par exemple), de laque ou encore d'émulsion caoutchoutée.

La membrane intérieure 5 est réalisée en matériau souple non tissé, avantageusement en matériau plastique thermosoudable dont le grammage est de l'ordre de 500 g/m² ; il s'agit avantageusement d'un matériau de type PVC dont la plasticité permet d'absorber et d'épouser l'épaisseur du treillis antivandalisme, notamment pour assurer un maintien optimal de ce dernier.
Comme expliqué par la suite, cette membrane intérieure 5 est éventuellement translucide pour faciliter la finition de la paroi souple 1.

Le treillis métallique 4 est intégralement emprisonné au sein de la paroi souple
1. Pour cela, il est pris en sandwich entre la membrane extérieure 3 et la membrane intérieure 5, dont les faces en regard sont entièrement thermosoudées l'une à l'autre. Ces membranes 3 et 5 épousent ainsi une grande partie de la surface des micro-câbles 6 du treillis 4.

Sur la figure 1, on remarque encore que le treillis anti-vandalisme 4 a la forme générale d'une bande s'étendant sur une partie seulement de la hauteur de la paroi souple 1 (en l'occurrence la partie basse). La partie haute de la paroi souple 1 est constituée uniquement par les deux membranes 3 et 5, soudées l'une avec l'autre. Par exemple, pour une paroi souple de 2,8 m de hauteur, le treillis anti-vandalisme peut s'étendre sur une hauteur comprise entre 1,60 m et 1,80 m.
Cette disposition particulière du treillis 4 permet de réduire le poids de la paroi souple 1, et aussi d'en réduire le coût de revient.

Les membranes extérieure 3 et intérieure 5 peuvent encore emprisonner un réseau complémentaire de fils ou feuillards (non représenté), isolé et indépendant du treillis anti-vandalisme.
Ce réseau complémentaire est destiné à être connecté à un système d'alarme apte à être activé lors d'une rupture de l'un des fils ou feuillards de ce réseau ; cela est susceptible de survenir en particulier lors d'une tentative d'effraction par lacération de la paroi souple 1.

Pour permettre la tension horizontale de la paroi souple 1, ses deux bordures verticales sont équipées d'un jonc 10.
Tel que représenté schématiquement sur la figure 3, pour son maintien, ce jonc 10 peut être emprisonné par une portion repliée de la paroi souple 1, formée seulement des deux membranes 3, 5 (et dépourvue de treillis métallique anti-vandalisme 4).

Ce jonc 10 peut coopérer avec la structure de carrosserie (non représentée) par l'intermédiaire d'un profilé d'accrochage 11 (toujours figure 3).
Le profilé 11 en question s'étend sur toute la hauteur de la paroi souple 1 et il comporte avantageusement une lèvre 11' venant recouvrir une partie de la face extérieure de la membrane extérieure 3, au niveau de sa zone de jonction avec le jonc 10. Cette lèvre métallique 11' protège alors la zone de jonction correspondante, et évite que l'on puisse lacérer verticalement cette partie latérale de la paroi souple 1 dépourvue du treillis de renfort 4.
Un tel profilé à lèvre 11 est adaptable sur toute autre forme ou structure de paroi souple sécurisée équipée d'un jonc vertical d'extrémité.

La tension verticale du rideau est réalisée au moyen d'organes d'accrochage 12 régulièrement répartis en partie inférieure de la paroi souple 1, associés à des sangles verticales équipées d'organes tendeurs.
Ces organes tendeurs sont par exemple du type de ceux décrits dans le document FR-2 832 366, à savoir constitués d'une boucle de mise en tension et d'une sangle munie à son extrémité inférieure d'un crochet d'arrimage.

Par ailleurs, pour sa finition, le rideau comporte encore des renforts et des sangles classiques (non représentés), qui sont avantageusement thermosoudés avec la paroi 1, et éventuellement pris en sandwich entre ses membranes 3 et 5.
Les renforts en question consistent en des bandes de matière. Ils sont en particulier disposés sur le pourtour de la paroi 1, de préférence au niveau des points de fixation des galets 2 et des organes inférieurs d'accrochage 12.
Les sangles sont réalisées en matériau textile. Elles sont disposées transversalement, du haut en bas de la paroi 1, et éventuellement horizontalement de façon à constituer un treillis textile ayant par exemple des mailles de 50 cm de côté ; les extrémités des sangles verticales peuvent recevoir les galets 2 et les organes inférieurs d'accrochage 12.

De manière générale, cette structure confère à la paroi 1 des caractéristiques de résistance élevée au cisaillement et à l'allongement, en particulier du fait de la prise en sandwich de l'intégralité du treillis anti-vandalisme 4 entre les membranes thermosoudées 3 et 5.
De plus, de manière surprenante, on améliore sensiblement les caractéristiques générales de résistance de la membrane extérieure 3 (ayant une bonne capacité de résistance à l'allongement), grâce à la fixation de la membrane intérieure 5 (comportant une certaine capacité de déformation élastique).
Par ailleurs, la paroi souple 1 selon l'invention présente l'intérêt de pouvoir être produite à un coût intéressant par rapport à la plupart des parois souples sécurisées existant sur le marché.

La paroi souple 15, représentée partiellement et en coupe sur la figure 4, constitue une variante de réalisation de celle décrite ci-dessus en relation avec les figures 1 et 2, et s'en distingue uniquement par la structure de son treillis anti-vandalisme.
En l'occurrence, le treillis anti-vandalisme correspondant 16, toujours emprisonné entre des membranes intérieure 5 et extérieure 3, est formé d'une association de feuillards métalliques 17 de type acier (à section transversale plate de forme générale rectangulaire) ; ces feuillards 17 sont convenablement agencés horizontalement et verticalement les uns par rapport aux autres, avec des points de soudage au niveau de leurs points d'intersection ou de croisement.
Une telle structure de treillis 16 a en particulier l'avantage d'être peu onéreuse, et de pouvoir être conditionnée en rouleaux.
Comme indiqué précédemment pour les micro-câbles à section circulaire, les feuillards 17 peuvent subir un traitement de surface approprié (revêtement PVC, laque, etc.) pour les protéger de la corrosion et assurer leur isolation électrique.

De manière alternative, la membrane intérieure 5 des parois 1 ou 15 peut consister en un treillis réalisé en un matériau plastique souple et thermosoudable, dont la maille a des côtés compris entre 1 cm et 5 cm.

Selon une caractéristique intéressante, si le treillis anti-vandalisme 4 est recouvert d'un revêtement type plastique PVC, ce dernier est de préférence choisi non thermosoudable avec les membranes 3 et 5 associées.
L'absence de liaison directe ou la faible liaison entre le treillis 4 et les membranes 3, 5 améliore la souplesse de la paroi obtenue, et facilite la mise en oeuvre des opérations de réparation.

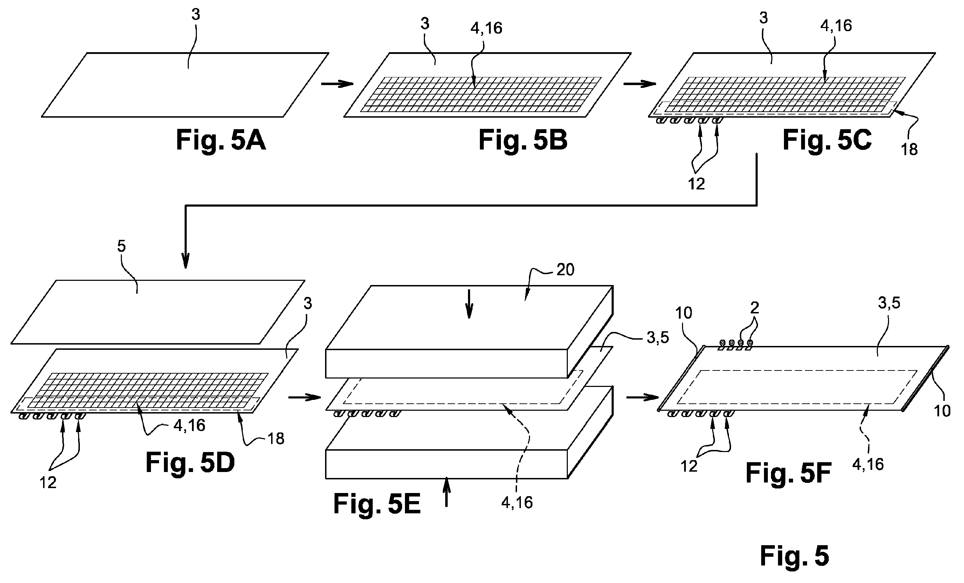

Un procédé de fabrication de tels rideaux est représenté schématiquement sur la figure 5. Le procédé correspondant comprend la succession d'opérations suivantes:
- mise en tension de la membrane extérieure 3 développée (figure 5A).
- pose du treillis anti-vandalisme 4, 16 contre la face intérieure de ladite membrane extérieure 3 (figure 5B) ; ce treillis métallique 4, 16 est soit préfabriqué, soit réalisé directement sur la membrane extérieure 3.
- pose du réseau complémentaire éventuel, destiné à être connecté au système d'alarme (non représenté).
- pose éventuelle de certains accessoires de finition destinés également à être pris en sandwich entre les membranes extérieure 3 et intérieure 5, en l'occurrence un renfort 18 en partie basse et les sangles des organes d'accrochage inférieur 12 (figure 5C).
- pose de la membrane intérieure 5, de sorte à recouvrir la face intérieure de la membrane extérieure 3, et aussi pour prendre en sandwich le treillis anti-vandalisme 4, 16, le réseau complémentaire d'alarme et les accessoires rapportés (figures 5D et 5E). Une membrane intérieure 5 en matériau translucide présente l'avantage, à ce stade, de ne pas masquer les éventuels traçages et repères préalablement réalisés sur la face en regard de la membrane extérieure 3, ce qui facilite la fixation ultérieure des accessoires de finition sur la paroi souple 1.
- thermosoudage des faces en regard des membranes intérieure 5 et extérieure 3, pour emprisonner le treillis anti-vandalisme 4, 16, cela au moyen d'une presse 20 apte à mettre en oeuvre une opération de pressage combinée à une opération de chauffage (figure 5E), et
- fixation des accessoires de finition complémentaires par des moyens de liaison mécanique de type boulonnage ou couture (notamment les galets 2 en partie haute, les joncs 10 sur les côtés, etc.) (figure 5F).

De manière alternative, certains ou tous les accessoires de finition peuvent être fixés après l'opération de thermosoudage (correspondant à l'étape 5E de la figure 5), cela par des moyens de fixation mécaniques adaptés de type boulonnage ou couture en particulier.

De manière alternative au procédé décrit ci-dessus, les faces en regard des deux membranes 3, 5 de la paroi souple 1 peuvent être fixées l'une avec l'autre par collage.
L'utilisation de colle est surtout intéressante lorsque l'on souhaite employer une membrane interne non thermosoudable, consistant par exemple en un tissé réalisé en fibres naturelles.

On comprend bien que le rideau de carrosserie selon l'invention peut être obtenu par la mise en oeuvre d'un procédé de fabrication simple et rapide.
Ce procédé a en plus l'intérêt de permettre le maintien optimal, par leur prise en sandwich, du treillis anti-vandalisme, et éventuellement du réseau complémentaire d'alarme et de certains accessoires (à savoir notamment les renforts et les sangles des organes d'accrochage inférieur).

Outre ces applications comme parois de véhicule, les parois souples selon l'invention sont intéressantes dans le cadre de nombreuses autres applications, par exemple pour constituer les parois de bâtiments en toile de type chapiteau.

## Revendications

1. Paroi souple sécurisée de type bâche, en particulier destinée à équiper une carrosserie de véhicule, intégrant un treillis métallique anti-vandalisme (4, 16), **caractérisée en ce qu'**elle comporte au moins une partie constituée d'un complexe de deux membranes de matière (3, 5) prenant en sandwich ledit treillis anti-vandalisme (4, 16),
la membrane extérieure (3), destinée à venir côté extérieur du véhicule, étant réalisée en matériau(x) à faible capacité d'allongement,
ledit treillis anti-vandalisme (4, 16) étant formé d'une pluralité d'éléments métalliques allongés (6, 17), par exemple de type acier en forme de micro-câbles, de feuillards et/ou de tresses, agencés longitudinalement et transversalement les uns par rapport aux autres, avec des points de soudage au niveau de leurs points d'intersection ou de croisement, pour former des mailles carrées ou rectangulaires dont les côtés sont avantageusement compris entre 2 et 20 cm, et
la membrane intérieure (5), destinée à venir côté intérieur du véhicule, étant réalisée en matériau(x) lui conférant une certaine capacité de déformation élastique,
lesquelles membranes (3, 5) sont collées ou soudées ensemble sur au moins la partie de leur surface en regard qui emprisonne ledit treillis (4, 16).

2. Paroi souple sécurisée selon la revendication 1, **caractérisée en ce que** les deux membranes (3, 5) sont réalisées en matériau thermosoudable, et sont soudées l'une sur l'autre par thermosoudage.

3. Paroi souple sécurisée selon l'une quelconque des revendications 1 ou 2, **caractérisée en ce que** la membrane extérieure (3) se compose d'un tissé dont au moins la face venant en regard de la membrane intérieure (5) est munie d'un revêtement en matériau thermosoudable ou collable, et **en ce que** ladite membrane intérieure (5) est réalisée intégralement dans un matériau plastique thermosoudable ou collable, opaque ou de préférence translucide.

4. Paroi souple sécurisée selon la revendication 3, **caractérisée en ce que** la membrane extérieure (3) consiste en un tissu enduit de PVC, dont l'âme est constituée de fibres naturelles ou synthétiques, par exemple de fils en polyester, et **en ce que** la membrane intérieure (5) est réalisée dans un matériau non-tissé.

5. Paroi souple sécurisée selon la revendication 4, **caractérisée en ce que** la membrane extérieure (3), souple, est constituée d'un tissé enduit de matériau PVC thermosoudable, dont l'âme est constituée de fibres en polyester et dont le grammage est de l'ordre de 600 à 900 g/m²,
**en ce que** le treillis métallique (4, 16) est formé d'une pluralité d'éléments métalliques allongés (6, 17), agencés longitudinalement et transversalement pour constituer ensemble des mailles carrées ou rectangulaires dont les côtés sont compris entre 2 cm et 20 cm, et **en ce que**
la membrane intérieure (5) est réalisée en matériau souple non tissé, de type matériau plastique thermosoudable dont le grammage est de l'ordre de 500 g/m².

6. Paroi souple sécurisée selon l'une quelconque des revendications 1 à 5, **caractérisée en ce que** les éléments métalliques allongés (6, 17) du treillis anti-vandalisme (4, 16) sont recouverts d'un revêtement approprié pour les protéger de la corrosion et pour assurer leur isolation électrique, par exemple de type PVC, thermosoudable ou non, laque ou revêtement spécial.

7. Paroi souple sécurisée selon l'une quelconque des revendications 1 à 6, **caractérisée en ce que** les deux membranes (3, 5) emprisonnent encore un réseau complémentaire de fils ou de feuillards métalliques, isolé et indépendant du treillis anti-vandalisme (4, 16), qui est destiné à être raccordé à un système d'alarme apte à signaler sa rupture, en particulier en cas de lacération desdites membranes (3, 5).

8. Paroi souple sécurisée selon l'une quelconque des revendications 1 à 7, **caractérisée en ce qu'**elle forme un rideau coulissant apte à coopérer avec une structure de carrosserie de véhicule ou autre, et **en ce qu'**elle comporte des accessoires de finition de type organes de coulissement (2) en partie haute, de type organes d'accrochage (10) aux extrémités latérales permettant d'exercer une tension longitudinale sur ledit rideau (1, 15), de type organes d'accrochage (12) régulièrement répartis en partie basse pour sa fixation sur le bord du plancher de ladite carrosserie, de type sangles et/ou renforts (18), certains au moins desdits accessoires de finition étant soudés par thermosoudage ou collés avec lesdites membranes (3, 5).

9. Paroi souple sécurisée selon la revendication 8, **caractérisée en ce que** le ou les organes d'accrochage (10), aux extrémités latérales verticales de la paroi souple 1, coopèrent avec la carrosserie par l'intermédiaire d'un profilé d'accrochage (11) comportant une lèvre longitudinale verticale (11') apte à recouvrir une partie de la face extérieure de la membrane extérieure (3), au niveau de la zone de jonction avec ledit organe d'accrochage (10) associé.

10. Procédé de fabrication d'une paroi souple sécurisée selon l'une quelconque des revendications 1 à 9, **caractérisé en ce qu'**il comprend la succession d'opérations suivantes :
- la mise en tension d'une première membrane développée, de préférence la membrane extérieure (3),
- la pose du treillis anti-vandalisme (4, 16) sur la face intérieure de ladite première membrane (3),
- éventuellement la pose du réseau complémentaire indépendant, destiné à être connecté au système d'alarme,
- la pose de la seconde membrane (5) sur la face interne de ladite première membrane (3), de sorte notamment à recouvrir intégralement ledit treillis anti-vandalisme (4, 16) et le cas échéant ledit réseau complémentaire d'alarme, et
- le thermosoudage ou le collage des faces en regard des deux membranes (3, 5), au moins sur toute la surface emprisonnant ledit treillis anti-vandalisme (4, 16),
laquelle paroi souple (1, 15) est éventuellement soumise à une opération de finition par le positionnement et la fixation d'accessoires (2, 10, 12, 18), notamment de sangles et de renforts (18).

11. Procédé de fabrication d'une paroi souple sécurisée selon la revendication 10, **caractérisé en ce que** certains au moins des accessoires de finition (2, 10, 12, 18) sont convenablement rapportés entre ou sur les membranes (3, 5) avant l'opération de thermosoudage ou de collage, et sont solidarisés avec l'une au moins desdites membranes (3, 5) lors de la mise en oeuvre de ladite opération de thermosoudage ou de collage.
